Europäisches Patentamt

European Patent Office

Office européen des brevets

(19)

(11) Veröffentlichungsnummer : **0 122 970**
**B1**

(12) **EUROPÄISCHE PATENTSCHRIFT**

(45) Veröffentlichungstag der Patentschrift :
**10.09.86**

(21) Anmeldenummer : **83112667.7**

(22) Anmeldetag : **15.12.83**

(51) Int. Cl.⁴ : **C 04 B 35/10, C 04 B 33/26,
H 01 B 3/02**

(54) **Tonerdeporzellanmasse.**

(30) Priorität : **31.12.82 DE 3248757**

(43) Veröffentlichungstag der Anmeldung :
**31.10.84 Patentblatt 84/44**

(45) Bekanntmachung des Hinweises auf die Patenterteilung : **10.09.86 Patentblatt 86/37**

(84) Benannte Vertragsstaaten :
**AT BE CH DE FR GB LI SE**

(56) Entgegenhaltungen :
**DE-C- 811 097
FR-A- 1 513 005
GB-A- 942 945
GB-A- 2 056 431
US-A- 2 332 014
Chemical Abstracts, Band 94, Nr. 20, 18. Mai 1981,
Columbus, Ohio, USA, V. HANYKER et al. "Improvement in the production of ceramics", Seite 286,
Abstract Nr. 161330p**

(73) Patentinhaber : **Siemens Aktiengesellschaft Berlin
und München
Wittelsbacherplatz 2
D-8000 München 2 (DE)**

(72) Erfinder : **Singer, Emil, Dr.
Neubaustrasse 2
D-8627 Redwitz (DE)**
Erfinder : **Stoephasius, Rainer
Mainweg 1
D-8621 Altenkunstadt (DE)**

## Beschreibung

Die Erfindung betrifft eine Tonerdeporzellanmasse für die Herstellung von elektrischen Isolatoren enthaltend calcinierte Tonerde als festigkeitssteigernden Anteil und ton- und kaolinhaltige Stoffe als plastischen Anteil sowie Flußmittel und Zuschläge.

Keramische Massen dieser Art müssen vielfachen Erfordernissen der Herstellung und des Brennens genügen, wobei sie gleichzeitig dem Scherben im gebrannten Zustand erhöhte Werte der elektromechanischen Eigenschaften verleihen sollen. Unter den Anforderungen, denen eine Masse in der Fertigung genügen muß, sind als wichtigste zu nennen eine gute Verformbarkeit, gute Trocknungseigenschaften, eine hohe Trockenfestigkeit und ein breites Brennintervall bei niedrigen Temperaturen.

Aus Chemical Abstracts, Band 94 (1981), Seite 286, Nr. 161 330p ist die Verwendung illitischer Rohstoffe in Massen für die Herstellung keramischer Isolatoren bekannt.

Tonerdeporzellanmassen für elektrische Isolatoren aus tonartigen und kaolinischen Stoffen mit bis zu 45 Gew.-% calcinierter Tonerde und einem Flußmittelgehalt von weniger als 25 Gew.-% sind aus DE-C 15 71 372 bekannt. Der Tonerdegehalt ist eingeschränkt. Aus solchen Massen hergestellte Isolatoren weisen noch nicht die erforderlichen Biegefestigkeiten und mechanischen Eigenschaften auf. Die aus der DE-B 29 32 914 bekannte Tonerdeporzellanmasse mit 40 bis 65 Gew.-% calcinierter Tonerde, 15 bis 40 Gew.-% plastischem Anteil und 20 bis 26 Gew.-% Flußmittel, die Alkalialuminiumsilikate und Erdalkalioxide in Form von Erdalkaliverbindungen enthält, wobei der Erdalkalioxidanteil 0,1 bis 5 Gew.-% der Gesamtmasse trägt, lassen sich wegen mangelnder Elastizität, z. B. beim Strangpressen schwieriger verarbeiten, da z. B. bei einem Anteil von 65 Gew.-% calcinierter Tonerde nur 15 Gew.-% plastischer Anteil möglich sind.

Versucht man diese Eigenschaften zu optimieren, so ergeben sich überraschend Schwierigkeiten hinsichtlich der Anteile an unplastischen Flußmitteln und plastischen Rohstoffen. Insbesondere werden Porzellanmassen mit einem sehr hohen Gehalt an calcinierter Tonerde von über 45 Gew.-% nicht allen technologischen Anforderungen der Praxis gerecht. Da calcinierte Tonerde einen unplastischen Anteil darstellt, ergeben sich insbesondere bei großen und komplizierten Isolatoren Schwierigkeiten hinsichtlich der Verformbarkeit der Masse. Gleichzeitig führt ein hoher Flußmittelanteil nicht nur zu einem engen Sinterbereich, sondern erhöht auch weiter den unplastischen Anteil der Rohstoffe mit seinen negativen Einflüssen auf die Verformbarkeit der Porzellanmasse. Andererseits führt die alleinige Absenkung des Flußmittelanteils zugunsten plastischer Rohstoffe ohne geeignete Kompensation zu hohen Brenntemperaturen und Schwierigkeiten beim Dichtbrand der Porzellanmasse.

Aufgabe der vorliegenden Erfindung ist es daher eine Tonerdeporzellanmasse für insbesondere großformatige Isolatoren zu finden, die bei niedrigem Flußmittelanteil durch eine geeignete Kompensation eine Erhöhung des plastischen Anteils und damit eine verbesserte Verformbarkeit der Masse aufweist, wobei die Sintertemperaturen zwischen 1 250 °C und 1 400 °C liegen und der unglasierte gebrannte Prüfstab nach DIN 40685 eine hohe mechanische Festigkeit von über 220 N/mm$^2$ aufweisen soll.

Gelöst wird diese Aufgabe erfindungsgemäß mit einer Tonerdeporzellanmasse, die gekennzeichnet ist durch einen Gehalt von 45-65 Gew.-% calcinierte Tonerde, 1 bis 20 Gew.-% eines illitischen Rohstoffes, 0,1 bis 5 Gew.-% Oxide der seltenen Erden und einen Flußmittelgehalt von kleiner 19,5 Gew.-% bezogen auf die Gesamtmasse.

Die Kombination von Oxiden der seltenen Erde und illitischen Stoffen bei einem Flußmittelgehalt von weniger als 19,5 Gew.-% führt in Tonerdeporzellanen zu überraschend guten Sintereigenschaften. Dadurch ist es möglich, solche Massen trotz des hohen Anteils an calcinierter Tonerde ohne besondere Feinmahlung der Versatzbestandteile bei normalen Brenntemperaturen dicht zu sintern.

Zusätzlich ermöglicht die hier anwendbare normale bis grobkörnige Mahlung der Ausgangsmaterialien eine texturarme Formgebung und vermindert die Rißanfälligkeit beim Trocknen und Brennen, besonders von großen komplizierten Formkörpern. Besonders wichtig ist jedoch, daß aufgrund des für die hohen Tonerdegehalte extrem niedrigen Anteils an unplastischen Flußmitteln von weniger als 19,5 Gew.-% die plastischen Rohstoffe in ausreichender Menge eingeführt und damit auch das Fließverhalten der Masse vorteilhaft beeinflußt werden kann.

Besonders bei großen Isolatoren ist es noch von besonderem Vorteil, daß durch Ersatz eines Teils der calcinierten Tonerde durch ZrSiO$_4$ von vornehmlich 0,1 bis 15 Gew.-% die Lichtbogenfestigkeit erhöht werden kann.

Eine besonders gute Verarbeitung und ein breites Brennintervall wird überraschenderweise mit einem Versatz aus 1 bis 20 Gew.-% illitischen Rohstoffen und weniger als 19,5 Gew.-% unplastischen Flußmitteln erreicht. Bei Einführung von mehr als 20 % Illit in den Versatz treten Trocknungsschwierigkeiten auf. Bei Zusätzen unter 1 % ist auf der anderen Seite die Wirkung zu gering. Besonders günstig erwiesen sich illitische Rohstoffe, die einen K$_2$O-Gehalt von mehr als 5 Gew.-% aufweisen.

Illite entstehen durch Verwitterung bzw. Zersetzung von Glimmern. Durch ihre Teilchenausbildung und die Wasseranlagerung sind sie plastischer als fette Tone. Illite enthalten bis zu 8 % Alkalioxid meist vorwiegend K$_2$O. Dementsprechend mußte ihre Flußmittelwirkung, bezogen auf den Alkaligehalt als wirksamen Bestandteil höchstens etwa der halben Feldspatmenge äquivalent sein. In Wirklichkeit ist sie

**0 122 970**

in $SiO_2$-reichen Systemen stärker und übertrifft in vielen Fällen sogar die des Feldspates, was auf die sehr große spezifische Oberfläche und das weitgehend gestörte Kristallgitter zurückzuführen ist. Illit ist also eine Art « plastischer Feldspat » was ihn technologisch besonders wertvoll macht.

Die Oxide der seltenen Erden wirken als sehr starkes und zugleich sehr breitbandiges Flußmittel, so daß ein sehr breites Brennintervall mit einer optimalen Verdichtung der Masse und in dessen Folge mit sehr hoher mechanischer Festigkeit am gebrannten Körper entsteht. Von den Oxiden der seltenen Erden sind besonders geeignet $CeO_2$, $La_2O_3$, $Nd_2O_3$, $Pr_2O_3$, $Gd_2O_3$ und $Y_2O_3$.

Für die Herstellung von Isolatoren komplizierter Bauform hat sich ein Tonerdeporzellanmasseversatz folgender Zusammensetzung besonders bewährt. 45 bis 65 Gew.-% calcinierter Tonerde, 10 bis 40 Gew.-% Ton und Kaolin, 1 bis 20 Gew.-% illitischer Rohstoff, weniger als 19,5 Gew.-% Flußmittel und 0,1 bis 5 Gew.-% Oxide der seltenen Erden.

Die Herstellung von Isolatoren aus der erfindungsgemäßen Masse erfolgt in an sich bekannter Weise, indem die Ausgangsmaterialien in einer Kugelmühle gemahlen werden, wobei das Gewichtsverhältnis Mahlgut zu Mahlkugeln zu Wasser 1 : 1 : 0,5 bis 1 beträgt. Die aufgerührte Masse wird auf einer Filterpresse entwässert und durch Pressen, Drehen, Strangziehen oder Gießen geformt. Die so erhaltenen Formkörper werden getrocknet und bei 1 250 bis 1 350 °C gebrannt.

Die chemische Zusammensetzung der in diesen Beispielen benutzten Ausgangsmaterialien geht aus der Tabelle hervor.

Tabelle

|  | GV | $SiO_2$ | $Al_2O_3$ | $Fe_2O_3$ | $TiO_2$ | CaO | MgO | $K_2O$ | $Na_2O$ |
|---|---|---|---|---|---|---|---|---|---|
| Ton A % | 7.5 | 60.2 | 26.2 | 1.0 | 1.4 | 0.3 | 0.5 | 2.5 | 0,4 |
| Ton B % | 9.6 | 56.2 | 27.0 | 2.6 | 1.4 | 0.7 | 1.0 | 1.3 | 0,2 |
| Kaolin % | 12.1 | 52.3 | 33.8 | 0.5 | 0.1 | 0.2 | 0.2 | 0.4 | 0,4 |
| Bentonit | 12.0 | 53.2 | 18.1 | 5.4 | 0.4 | 4.3 | 4.8 | 1.5 | 0,4 |
| Illit | 6.9 | 50.3 | 31.0 | 2.0 | 0.4 | 0.1 | 0.8 | 8.1 | 0,4 |
| Kalifeldspat | 0.4 | 65.7 | 18.2 | – | 0.1 | – | – | 14.9 | 0,7 |
| Nephelin-Syenit | 0.7 | 60.7 | 23.3 | 0.1 | – | 0.7 | 0.1 | 4.6 | 9,8 |
| calc.Tonerde | 0.1 | 0.1 | 99.7 | – | – | – | – | – | 0,1 |

sowie seltene Erden wie vorzugsweise $La_2O_3$, $Nd_2O_3$, $Pr_2O_3$, $Gd_2O_3$, $Y_2O_3$ und $CeO_2$.

Im folgenden wird die Erfindung anhand von Ausführungsbeispielen näher erläutert, wodurch jedoch die erfindungsgemäße Zusammensetzung in keiner Weise begrenzt wird.

Beispiel 1

Diese erfindungsgemäße Zusammensetzung hat mit 48 Gew.-% calcinierter Tonerde bereits einen sehr hohen Gehalt an dieser. Sie bleibt mit einem Flußmittelanteil von 18 % unter der Grenze von 19,5 Gew.-%.

| | |
|---|---|
| calcinierte Tonerde | 48 Gew.-% |
| Ton A | 9 Gew.-% |
| Ton B | 9 Gew.-% |
| Kaolin | 10 Gew.-% |
| Bentonit | 1 Gew.-% |
| Illit | 5 Gew.-% |
| Kalifeldspat | 10 Gew.-% |
| Nephelin-Syenit | 7 Gew.-% |
| $La_2O_3$ | 1 Gew.-% |

Die Herstellung der Proben erfolgt nach dem oben beschriebenen Verfahren. Der Brand erfolgte in einem Industrietunnelofen bei 1 350 °C. Das daraus erhaltene Tonerdeporzellan hatte eine Dichte von 2,84 $g/cm^3$, eine Reindichte 3,46 $g/cm^3$, und unglasiert eine Biegefestigkeit von 231 $N/mm^2$.

Eine chemische Analyse ergab nach dem Brand folgende Zusammensetzung.

3

| | |
|---|---|
| SiO$_2$ | 30,7 Gew.-% |
| Al$_2$O$_3$ | 63,2 Gew.-% |
| Fe$_2$O$_3$ | 0,6 Gew.-% |
| TiO$_2$ | 0,3 Gew.-% |
| CaO | 0,2 Gew.-% |
| MgO | 0,2 Gew.-% |
| K$_2$O | 2,7 Gew.-% |
| Na$_2$O | 1,1 Gew.-% |
| La$_2$O$_3$ | 1,0 Gew.-% |

### Beispiel 2

Die erfindungsgemäße Zusammensetzung hat mit 65 % einen extrem hohen Gehalt an calcinierter Tonerde. Dadurch bleibt der Flußmittelgehalt mit 10 Gew.-% niedrig, was nur durch den Einsatz von 15 Gew.-% Illit und 1 % CeO$_2$ ermöglicht wurde.

| | |
|---|---|
| calcinierte Tonerde | 65 Gew.-% |
| Ton A | 3 Gew.-% |
| Ton B | 6 Gew.-% |
| Illit | 15 Gew.-% |
| Bentonit | 1 Gew.-% |
| Feldspat | 3 Gew.-% |
| Nephelin-Syenit | 6 Gew.-% |
| CeO$_2$ | 1 Gew.-% |

Die Herstellung der Proben erfolgte nach dem obenbeschriebenen Verfahren. Der Brand erfolgt in einem Industrieofen bei 1 350 °C. Das daraus erhaltene Tonerdeporzellan hatte eine Dichte von 3,0 g/cm$^3$, eine Reindichte von 3,40 g/cm$^3$ und unglasiert eine Biegefestigkeit von 263 N/mm$^2$.

Eine chemische Analyse ergab nach dem Brand folgende Zusammensetzung.

| | |
|---|---|
| SiO$_2$ | 19,3 Gew.-% |
| Al$_2$O$_3$ | 75,5 Gew.-% |
| Fe$_2$O$_3$ | 0,5 Gew.-% |
| TiO$_2$ | 0,2 Gew.-% |
| CaO | 0,2 Gew.-% |
| MgO | 0,2 Gew.-% |
| K$_2$O | 2,2 Gew.-% |
| Na$_2$O | 0,9 Gew.-% |
| CeO$_2$ | 1,0 Gew.-% |

### Patentansprüche

1. Tonerdeporzellanmasse für die Herstellung von elektrischen Isolatoren enthaltend calcinierte Tonerde als festigkeitssteigernden Anteil und ton- und kaolinhaltige Stoffe als plastischen Anteil sowie Flußmittel und Zuschläge, gekennzeichnet durch einen Gehalt von 45-65 Gew.-% calcinierte Tonerde, 1 bis 20 Gew.-% eines illitischen Rohstoffes, 0,1 bis 5 Gew.-% Oxide der seltenen Erden und einen Flußmittelgehalt von kleiner 19,5 Gew.-% bezogen auf die Gesamtmasse.

2. Tonerdeporzellanmasse nach Anspruch 1, dadurch gekennzeichnet, daß der illitische Rohstoff einen K$_2$O-Gehalt > 5 Gew.-% aufweist.

3. Tonerdeporzellanmasse nach Anspruch 1 und 2, gekennzeichnet durch einen Gehalt von

45 bis 65 Gew.-% calcinierte Tonerde
10 bis 40 Gew.-% Ton und Kaolin
1 bis 20 Gew.-% illitische Rohstoffe < 19,5 Gew.-% Flußmittel und
0,1 bis 5 Gew.-% seltene Erdoxide.

4. Tonerdeporzellanmasse nach Anspruch 1 bis 3, dadurch abgewandelt, daß ein Teil der calcinierten Tonerde durch ZrSiO$_4$ ersetzt ist.

5. Tonerdeporzellanmasse nach Anspruch 4, gekennzeichnet durch einen Gehalt von 0,1 bis 15 Gew.-% ZrSiO$_4$.

### Claims

1. An alumina porcelain paste for the production of electrical insulators containing calcined alumina

**0 122 970**

as a constituent which increases the strength and materials containing clay and kaolin as a plastic constituent, together with fluxing material and additives, characterised by a content of 45 to 65 % by weight of calcined alumina, 1 to 20 % by weight of an illitic raw material, 0.1 to 5 % by weight of rare earth oxides and a fluxing material content of less than 10.5 % by weight, with reference to the total paste.

2. An alumina porcelain paste as claimed in Claim 1, characterised in that the illitic raw material has a K₂O-content > 5 % by weight.

3. An alumina porcelain paste as claimed in Claim 1 and 2, characterised by a content of

45 to 65 % by weight of calcined alumina
10 to 40 % by weight of clay and kaolin
1 to 20 % by weight of illitic raw materials < 19.5 % by weight of fluxing material and
0.1 to 5 % by weight of rare earth oxides.

4. An alumina porcelain paste as claimed in Claim 1 to 3, modified in that a part of the calcined alumina is replaced with ZrSiO₄.

5. An alumina porcelain paste as claimed in Claim 4, characterised by a content of 0.1 to 15 % by weight of ZrSiO₄.

**Revendications**

1. Composition de porcelaine d'alumine pour la fabrication d'isolateurs électriques, contenant de l'alumine calcinée comme constituant augmentant la résistance et une substance contenant de l'argile et du kaolin comme constituant plastique, ainsi que des fondants et des additifs, caractérisée par une teneur de 45 à 65 % en poids d'alumine calcinée, de 1 à 20 % en poids d'une matière première illitique, de 0,1 à 5 % en poids d'oxyde des terres rares et par une teneur en agents fondants inférieure à 19,5 % en poids rapportées à la composition totale.

2. Composition de porcelaine d'alumine suivant la revendication 1, caractérisée en ce que la matière première illitique a une teneur en K₂O supérieure à 5 % en poids.

3. Composition de porcelaine d'alumine suivant la revendication 1 ou 2, caractérisée par une teneur de

45 à 65 % en poids d'alumine calcinée
10 à 40 % en poids d'argile et de kaolin
1 à 20 % en poids de matière première illitique < 19,5 % en poids d'agents fondants et
0,1 à 5 % en poids d'oxyde de terres rares.

4. Composition de porcelaine d'alumine suivant les revendications 1 à 3, caractérisée en ce qu'une partie de l'alumine calcinée est remplacée par ZrSiO₄.

5. Composition de porcelaine d'alumine suivant la revendication 4, caractérisée par une teneur de 0,1 à 15 % en poids de ZrSiO₄.

5